(19) Europäisches Patentamt
European Patent Office
Office européen des brevets

(11) Veröffentlichungsnummer: **0 281 082**
**A2**

(12) **EUROPÄISCHE PATENTANMELDUNG**

(21) Anmeldenummer: **88103092.8**

(22) Anmeldetag: **01.03.88**

(51) Int. Cl.⁴: **C08G 79/00**, C08G 85/00, C08G 77/00, C08L 101/00

(30) Priorität: **02.03.87 DE 3706714**

(43) Veröffentlichungstag der Anmeldung: **07.09.88 Patentblatt 88/36**

(84) Benannte Vertragsstaaten: **AT BE CH DE ES FR GB GR IT LI LU NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**D-8000 München 19(DE)**

(72) Erfinder: **Tünker, Gerhard**
**Asterlagerstrasse 132**
**D-4100 Duisburg 14(DE)**
Erfinder: **Schmidt, Helmut, Dr.**
**Badstrasse 2**
**D-8705 Zellingen(DE)**
Erfinder: **Philipp, Gottfried, Dr.**
**St.-Josef-Strasse 7**
**D-8150 Holzkirchen(DE)**

(74) Vertreter: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40(DE)**

(54) **Anorganische Polykondensate mit eingebauten organischen Polymeren, Verfahren zur Herstellung derselben und deren Verwendung.**

(57) Es werden anorganische Polykondensate mit eingebauten organischen Polymeren beschrieben, die dadurch erhältlich sind, daß man entweder

a) eine Lösung von mindestens einem organischen Polymeren und von mindestens einer anorganischen, hydrolytisch polykondensierbaren, monomeren oder bereits teilkondensierten Verbindung in einem geeigneten Lösungsmittel der Einwirkung von Wasser bzw. Feuchtigkeit aussetzt, oder

b) in einer Lösung von polymerisierbaren organischen Komponenten und mindestens einer anorganischen, hydrolytisch polykondensierbaren monomeren oder bereits teilkondensierten Verbindung in einem geeigneten Lösungsmittel entweder

i) zunächst eine Polymerisation der organischen Komponenten durchführt und die Lösung daraufhin der Einwirkung von Wasser bzw. Feuchtigkeit aussetzt; oder

ii) zunächst durch Einwirkenlassen von Wasser bzw. Feuchtigkeit die Polykondensation der anorganischen Verbindung(en) veranlaßt und daraufhin die organischen Komponenten polymerisiert; oder

EP 0 281 082 A2

iii) die Polymerisation der organischen Komponenten und die Polykondensation der anorganischen Verbindung(en) nebeneinander durchführt.

Derartige Stoffe zeigen im Vergleich zu den reinen organischen Polymeren modifizierte Eigenschaften und sind für eine Vielzahl von Verwendungen geeignet.

# Anorganische Polykondensate mit eingebauten organischen Polymeren, Verfahren zur Herstellung derselben und deren Verwendung

Die vorliegende Erfindung betrifft neue polymere Zusammensetzungen,die sowohl organische Polymere als auch anorganische Polykondensate umfassen.Insbesondere bezieht sich die vorliegende Erfindung auf eine neue Gruppe von Stoffen, bei denen ein anorganisches Netzwerk neben einem organischen Polymernetzwerk vorliegt. Weiterhin sind auch Verfahren zur Herstellung derartiger Stoffe und deren Verwendung Gegenstand der vorliegenden Erfindung.

Organische Polymere einerseits und anorganische Polykondensate andererseits sind seit langer Zeit bekannt. Es gehört auch zum Stand der Technik, polymere Substanzen gleichzeitig aus anorganischen und organischen Komponenten herzustellen. In derartigen Stoffen sind die anorganischen und organischen Bestandteile durch kovalente Bindungen fest miteinander verknüpft. Als Beispiele hierfür seien die in der DE-OS 33 26 930 beschriebenen Schaumstoffe aus Silicaten und Polymethacrylsäuren oder die in der EP-A-129 121 beschriebenen Zusammensetzungen auf der Basis von Alkylenalkylacrylat-Copolymeren und Silanen genannt. Stoffe, bei denen organische Polymere in das anorganische Netzwerk so eingebaut sind, daß sie zwar stabil darin eingebunden, aber nicht kovalent damit verbunden sind, sind bisher nicht hergestellt worden. Derartige Kombinationen von anorganischen und organischen Polymeren sollten es jedoch erlauben, die bekannten Eigenschaften von organischen Polymeren zu modifizieren und dabei bestimmte gewünschte Eigenschaften zu verbessern bzw. das organische Polymere mit ganz neuen Eigenschaften zu versehen.

Aufgabe der Erfindung ist es daher, eine polymere Zusammensetzung zu schaffen, die Eigenschaften aufweist, die im Vergleich zu den Eigenschaften des ihr zugrundeliegenden organischen Polymeren modifiziert sind bzw. beim reinen organischen Polymeren überhaupt nicht anzutreffen sind.

Diese Aufgabe wird erfindungsgemäß gelöst durch ein Verfahren zur Herstellung anorganischer Polykondensate mit eingebauten organischen Polymeren, das dadurch gekennzeichnet ist, daß man entweder

a) eine Lösung von mindestens einem organischen Polymeren und von mindestens einer anorganischen, hydrolytisch polykondensierbaren, monomeren oder bereits teilkondensierten Verbindung in einem geeigneten Lösungsmittel der Einwirkung von Wasser bzw. Feuchtigkeit aussetzt, oder

b) in einer Lösung von polymerisierbaren organischen Komponenten und mindestens einer anorganischen, hydrolytisch polykondensierbaren monomeren oder bereits teilkondensierten Verbindung in einem geeigneten Lösungsmittel entweder

i) zunächst eine Polymerisation der organischen Komponenten durchführt und die Lösung daraufhin der Einwirkung von Wasser bzw. Feuchtigkeit aussetzt, oder

ii) zunächst durch Einwirkenlassen von Wasser bzw. Feuchtigkeit die Polykondensation der anorganischen Verbindung(en) veranlaßt und daraufhin die organischen Komponenten polymerisiert; oder

iii) die Polymerisation der organischen Komponenten und die Polykondensation der anorganischen Verbindung(en) nebeneinander durchführt.

Gegenstand der Erfindung sind ferner die durch ein derartiges Verfahren erhältlichen Produkte und deren Verwendung zur Herstellung von Überzügen und Formkörpern.

Als Ausgangsmaterialien für die erfindungsgemäßen Stoffe eignen sich prinzipiell alle anorganischen, hydrolytisch polykondensierbaren Verbindungen und alle bekannten organischen Polymeren und deren (monomere) Ausgangsverbindungen, unter der Voraussetzung, daß die anorganischen Verbindungen einerseits und die organischen Komponenten andererseits nicht miteinander reagieren dürfen, d.h. daß sich keine oder zumindest möglichst wenige kovalente Bindungen zwischen dem organischen und dem anorganischen Teil ausbilden sollen.

Beispiele für geeignete organische Polymere sind

1. Polyalkylene und Polyarylene, wie z.B. Polyethylen, Polypropylen, Polybuten, Polyisobuten, Polystyrol und Styrol-Butadien-Copolymere;

2. halogenierte Polyalkylene, wie z.B. Polytetrafluorethylen, Polychlortrifluorethylen, chloriertes Polyethylen, Polyvinylfluorid, Polyvinylchlorid, Polyvinylidenfluorid und Polyvinylidenchlorid;

3. mit funktionellen Gruppen versehene Polyalkylene, wie z.B. Polyvinylalkohol, Polyvinylester (Polyvinylacetat, Ethylen-Vinylacetat-Copolymere, Vinylchlorid-Vinylacetat-Copolymere, Polyvinylbutyral und dgl.), Polyvinylformal, Polyvinylpyrrolidon und Polyvinylcarbazol;

4. Polyaddukte und Polykondensate, wie z.B. Polyether (Polyoxymethylen, Polyethylenoxid, Polyphenylenoxid und dgl.), Polyester (Polyethylenglykol-Terephthalat, Polybutylenglykol-Terephthalat, Polydiallylphthalat und dgl.) und Polyamide (aus Caprolactam, Laurinlactam, Hexamethylendiamin und Isophthal-,Terephthal-,Adipin-und/oder Sebacinsäure), Polyurethane, Polyharnstoffe, Polycarbonate und Polysulfone;

5. Polymere aus (Meth)acrylsäure und deren Derivaten, wie z.B. Polyacrylsäure, Polymethacrylsäure, Polymethylacrylat, Polymethylmethacrylat, 2-Hydroxyethylmethacrylat, Polyacrylnitril, Polymethacrylimid und Styrol-Acrylnitril-Copolymere;

6. gegebenenfalls modifizierte, natürlich vorkommende Polymere, wie z.B. Cellulose, Celluloseether (Methylcellulose, Ethylcellulose, Hydroxypropylcellulose und dgl.), Celluloseester (Celluloseacetat, Cellulosetriacetat, Cellulosepropionat, Celluloseacetatpropionat, Celluloseacetat-butyrat, Cellulosenitrat und dgl.) und Carboxymethylcellulose;

7. Kautschuke, wie z.B. Naturkautschuke, Ethylen-Propylen-Kautschuk, Butylkautschuk, Isopren-Isobuten-Kautschuk, Polybutadien-Kautschuk, Chloropren-Kautschuk, Butadien-Acrylnitril-Kautschuk, Acrylnitril-Chloropren-Kautschuk, Styrol-Chloropren-Kautschuk und Silicon-Kautschuk (Methylsilicon-Kautschuk, Methylphenylsilicon-Kautschuk und dgl.);

8. Formaldehydkondensate, wie z.B. Harnstoff-Formaldehyd-Harze, Melamin-Formaldehyd-Harze, Phenol-Formaldehyd-Harze, Resorcin-Formaldehyd-Harze und Melamin-Phenol-Formaldehyd-Harze.

Wie aus der obigen Aufstellung ersichtlich, umfaßt der Begriff organische Polymere, wie er hier verwendet wird, nicht nur durch radikalische oder ionische Polymerisation hergestellte (Co)polymere, sondern auch solche, die durch Polyadditions-oder Polykondensationsreaktionen zugänglich sind.

Organische Polymere, die erfindungsgemäß besonders bevorzugt sind, sind elastische Materialien, d.h. insbesondere lineare Polymere. Stark vernetzte Polymere werden demgegenüber weniger bevorzugt. Beispiele für besondern bevorzugte Polymergruppen sind Polyacrylate Polymethacrylate, Polyamide, Polyurethane, Polycarbonate, PVC und Polystyrol. Ethylenvinylacetat wird ebenfalls besonders bevorzugt.

Selbstverständlich können erfindungsgemäß auch Mischungen von organischen Co(polymeren) eingesetzt werden.

Hinsichtlich des Molekulargewichts des organischen Polymeren bestehen keinerlei Beschränkungen,so lange sich das Polymere nur im vernünftigen Maße im verwendeten Lösungsmittel löst. Es können also auch Oligomere, z.B. solche mit Molekulargewichten unter 1000, oder hochmolekulare Polymere mit Molekulargewichten von 100000 bis zu 1 000 000 und darüber Verwendung finden, solange sie nur genügend löslich sind.

Das organische Polymere kann erfindungsgemäß auch erst in Anwesenheit der zu polykondensierenden oder bereits polykondensierten anorganischen Verbindung hergestellt werden. In diesem Fall muß ebenfalls darauf geachtet werden, daß die zu diesem Zweck verwendeten organischen Monomeren bzw. Oligomeren nicht mit den noch nicht polykondensierten anorganischen Verbindungen reagieren. Als organische Monomere können diejenigen verwendet werden, die die eben genannte Voraussetzung erfüllen und durch radikalische oder ionische Polymerisation und/oder Polyadditions-oder Polykondensationsreaktion in organische Polymere umgewandelt werden können.

Als anorganische Ausgangsmaterialien kommen alle löslichen, hydrolytisch polykondensierbaren Verbindungen in Betracht. Als Beispiele seien Verbindungen von Al, B, Si, Sn, P, As, Sb, Bi, V, Ti, Zr, Cr, Mo, W und Mn genannt.

Erfindungsgemäß besonders bevorzugte anorganische Verbindungen leiten sich von Al, B, Si, Ti und Zr ab.

Verwendbare Aluminiumverbindungen sind insbesondere solche mit der Summenformel

$AlR_3$

in welcher die Reste R, die gleich oder verschieden sein können, Halogen, Alkyl, Alkoxy, Acyloxy oder Hydroxy bedeuten und zwei Reste R zusammen einen Chelatliganden bilden können. Die Anwesenheit eines Chelatliganden wird insbesondere dann bevorzugt, wenn drei gleiche Reste R zu einer gegenüber $H_2O$ sehr reaktiven Verbindung $AlR_3$ führen und dadurch die Kontrolle der Hydrolysereaktion erschweren würden. Beispiele für solche Reste R sind Halogen und Alkyl. Auch für R = OH ist die Verwendung eines Chelatliganden vorteilhaft. Gängige Chelatliganden sind z.B. Acetylaceton und Acetessigsäureethylester.

Auch Al-Salze anorganischer und organischer Säuren, wie z.B. $HNO_3$, $H_2SO_4$, $H_3PO_4$ und Ameisensäure, Essigsäure, Propionsäure und Oxalsäure können erfindungsgemäß Verwendung finden. In diesem Fall empfiehlt sich ebenfalls die Komplexierung mit einem Chelatliganden.

Geeignete Verbindungen von Titan und Zirkonium weisen z.B. die Formel (I)

$MR'_4$ (I)

auf, in welcher M für Titan oder Zirkonium steht und die Reste R, die gleich oder verschieden sein können, z.B. Halogen, Alkoxy oder Acyloxy bedeuten.

Geeignete Siliciumverbindungen weisen z.B. die allgemeine Formel (II) auf

$R''_mSiX_{(4-m)}$ (II)

in der die Gruppen X, die gleich oder verschieden sein können, Wasserstoff, Halogen, Alkoxy, Acyloxy, Alkylcarbonyl, Alkoxycarbonyl oder $-NR'''_2$ ($R'''$ = H und/oder Alkyl) bedeuten und die Reste R", die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O-oder S-Atome oder die Gruppe -NR‴ unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy-oder Vinylgruppen tragen können und m den Wert 1, 2 oder 3 hat.

Für die vorstehend angegebenen allgemeinen Formeln gilt: Alkylreste sind z.B. geradkettige, verzweigte oder cyclische Reste mit 1 bis 20, vorzugsweise 1 bis 10, Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl und Cyclohexyl.

Alkenylreste und Alkinylreste sind z.B. geradkettige, verzweigte oder cyclische Reste mit 2 bis 20, vorzugsweise 2 bis 10, Kohlenstoffatomen und mindestens einer C-C-Doppel-bzw. Dreifachbindung und insbesondere niedere Alkenylreste und Alkinylreste wie Vinyl, Allyl, 2-Butenyl, Ethinyl und Propargyl.

Die Alkoxy-, Acyloxy-, Alkylamino-, Dialkylamino-, Alkylcarbonyl-, Alkoxycarbonyl-, Alkylaryl-, Arylalkyl-, Alkenylaryl-, Arylalkenyl-, Alkinylaryl-, Arylalkinyl-und die substituierten Aminoreste oder Amidreste leiten sich z.B. von den vorstehend genannten Alkyl-, Alkenyl-und Alkinylresten ab. Spezielle Beispiele sind Methoxy, Ethoxy, n-und i-Propoxy, n-, sek.-und tert.-Butoxy, Isobutoxy, β-Methoxyethoxy, Acetyloxy, Propionyloxy, Monomethylamino, Monoethylamino, Dimethylamino, Diethylamino, N-Ethylanilino, Methylcarbonyl, Ethylcarbonyl, Methoxycarbonyl, Ethoxycarbonyl, Benzyl, 2-Phenylethyl, Tolyl und Styryl. Bevorzugte Arylreste sind Phenyl, Biphenyl und Naphthyl, wobei Phenyl besonders bevorzugt wird.

Die genannten Reste können gegebenenfalls einen oder mehrere Substituenten tragen, z.B. Halogenatome, niedere Alkyl-oder Alkoxyreste und Nitrogruppen. Hierbei werden Halogenatome, insbesondere Fluoratome, die dem Produkt hydrophobe Eigenschaften und insbesondere gute Schwitzwasserbeständigkeit verleihen können, bevorzugt.

Unter den Halogenen,die direkt an das Metall gebunden sind, sind Fluor, Chlor und Brom bevorzugt.

Konkrete Beispiele für erfindungsgemäß verwendbare Aluminiumverbindungen sind $Al(CH_3)_3$, $Al(C_2H_5)_3$, $Al(n\text{-}C_3H_7)_3$, $Al(i\text{-}C_3H_7)_3$, $Al(C_4H_9)_3$, $Al(i\text{-}C_4H_9)_3$, $Al(sek.\text{-}C_4H_9)_3$, $AlCl_3$, $AlCl(OH)_2$, $Al(OCH_3)_3$, $Al(OC_2H_5)_3$, Aluminiumformiat, Aluminiumacetat und Aluminiumoxalat sowie die entsprechenden chelatisierten Verbindungen, wie z.B. die Acetylacetonate. Bei Raumtemperatur flüssige Verbindungen, wie z.B. $Al(sek.\text{-}C_4H_9)_3$ und $Al(i\text{-}C_3H_7)_3$ werden besonders bevorzugt.

Konkrete Beispiele für Titan-oder Zirkonverbindungen sind $TiCl_4$, $ZrCl_4$, $Ti(OC_2H_5)_4$, $Ti(OC_3H_7)_4$, $Ti(O\text{-}i\text{-}C_3H_7)_4$, $Ti(OC_4H_9)_4$, $Ti(kresyl)_4$, $Zr(O\text{-}i\text{-}C_3H_7)_4$, $Zr(OC_4H_9)_4$, $Ti(acetylacetonato)_2(O\text{-}i\text{-}C_3H_7)_2$, $Zr(acetylacetonato)_4$, $Ti(2\text{-}ethylhexoxy)_4$ und andere Titan-oder Zirkonkomplexe mit Chelatliganden, die vorzugsweise über Sauerstoff und/oder Stickstoff koordiniert sind.

Bei den organofunktionellen Silanen kann die Gruppe R" gegebenenfalls durch Sauerstoff-oder Schwefelatome oder -NR‴-Gruppen unterbrochen sein. Vorzugsweise entstehen auf diese Art 2 bis 10 sich wiederholende Struktureinheiten.

Spezielle Beispiele für organofunktionelle Silane sind:

$CH_3Si\text{-}Cl_3$, $CH_3\text{-}Si\text{-}(OC_2H_5)_3$, $C_2H_5\text{-}Si\text{-}Cl_3$, $C_2H_5\text{-}Si\text{-}(OC_2H_5)_3$, $CH_2=CH\text{-}Si\text{-}(OC_2H_5)_3$, $CH_2=CH\text{-}Si\text{-}(OC_2H_4OCH_3)_3$, $CH=CH\text{-}Si\text{-}(OOCCH_3)_3$ $CH_2=CH\text{-}SiCl_3$, $CH_2=CH\text{-}CH_2\text{-}Si\text{-}(OCH_3)_3$, $CH_2=CH\text{-}CH_2\text{-}Si\text{-}(OC_2H_5)_3$, $C_3H_7\text{-}Si\text{-}(OCH_3)_3$, $C_6H_5\text{-}Si\text{-}(OCH_3)_3$, $C_6H_5\text{-}Si\text{-}(OC_2H_5)_3$, $(CH_3)_2\text{-}Si\text{-}Cl_2$, $(CH_3)_2\text{-}Si\text{-}(OC_2H_5)_2$, $(C_2H_5)_2\text{-}Si\text{-}(OC_2H_5)_2$, $(CH_3)(CH_2=CH)\text{-}Si\text{-}Cl_2$, $(CH_3)_3\text{-}Si\text{-}Cl$,$(C_2H_5)_3\text{-}Si\text{-}Cl$, $(CH_3)_2\text{-}Si\text{-}(OCH_3)_2$, $(CH_3)_2\text{-}Si\text{-}(OC_2H_5)_2$, $(C_6H_5)_2\text{-}Si\text{-}Cl_2$, $(C_6H_5)_2\text{-}Si\text{-}(OCH_3)_2$, $(C_6H_5)_2\text{-}Si\text{-}(OC_2H_5)_2$ $(t\text{-}C_4H_9)$ $(CH_3)_2\text{-}Si\text{-}Cl$, $(CH_3)_2(CH_2=CH\text{-}CH_2)\text{-}Si\text{-}Cl$, $(CH_3O)_3\text{-}Si\text{-}C_3H_6\text{-}Cl$, $(C_2H_5O)_3\text{-}Si\text{-}C_3H_6\text{-}CN$,

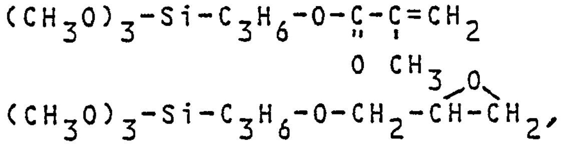

$(CH_3O)_3\text{-}Si\text{-}C_3H_6\text{-}NH_2$

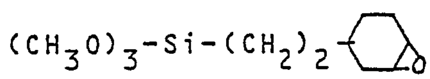

Diese Silane sind zum Teil Handelsprodukte oder sie lassen sich nach bekannten Methoden herstellen: vgl. W. Noll, "Chemie und Technologie der Silicone", Verlag Chemie GmbH, Weinheim Bergstrasse (1968).

Anstelle der monomeren Ausgangssilane können gegebenenfalls auch vorkondensierte, im Reaktionsmedium lösliche Oligomere dieser Silane eingesetzt werden; d.h. geradkettige oder cyclische, niedermolekulare Teilkondensate (Polyorganosiloxane) mit einem Kondensationsgrad von z.B. etwa 2 bis 100, insbesondere etwa 2 bis 6.

Ganz allgemein sind die erfindungsgemäß verwendbaren anorganischen polykondensierbaren Verbindungen nicht auf die jeweiligen monomeren Verbindungen beschränkt; vielmehr können die letzteren bereits bis zu einem gewissen Grad hydrolytisch vorkondensiert sein, wobei lediglich zu beachten ist, daß sich das Vorkondensat im verwendeten Lösungsmittel noch zufriedenstellend lösen muß. Selbstverständlich können diese Vorkondensate auch mehrere voneinander verschiedene Zentralatome aufweisen.

Beispiele für andere geeignete Verbindungen sind z.B. Borsäure, die Borsäureester, insbesondere Borsäuretrimethyl-und Borsäuretriethylester, Borhalogenide, z.B. $BCl_3$, $SnCl_4$, $VOCl_3$, $VO(OR)_3$ und $V(OR)_3$, wobei R Alkyl bedeutet.

Als Reste am jeweiligen anorganischen Zentralatom eignen sich besonders solche, die leicht abspaltbar sind und gleichzeitig leichtflüchtige Spaltprodukte ergeben (wie z.B. Cl).

Neben den hydrolytisch polykondensierbaren anorganischen Verbindungen können auch noch andere anorganische Verbindungen anwesend sein, die in das bei der Hydrolyse entstehende Netzwerk eingebaut werden, z.B. sogenannte Netzwerkwandler. Besonders bevorzugt sind hier Alkoholate und Hydroxide von Erdalkalimetallen, wie z.B. Calcium, sowie Kieselsäureester und Silane. Als Netzwerkwandler können auch Übergangsmetallverbindungen, z.B. solche von Zn, den Eisenmetallen, insbesondere Fe, Co, Ni , den Lanthaniden und den Actiniden, eingesetzt werden. Auch Bleiverbindungen eignen sich für diesen Zweck.

Als Lösungsmittel für die Herstellung der erfindungsgemäßen Stoffe eignen sich alle wasserfreien, organischen Lösungsmittel, die sowohl die anorganischen als auch die organischen Komponenten zu lösen vermögen und diesen gegenüber inert sind, d.h. mit keinem der Reaktanten bzw. Komponenten reagieren. Als Beispiele für geeignete organische Lösungsmittel seien genannt aliphatische oder aromatische Kohlenwasserstoffe, gegebenenfalls substituiert, z.B. mit Halogen, Alkohole, Ester, z.B. Alkylacetate, Ketone oder Ether. Konkrete Beispiele für derartige Verbindungen sind Toluol, Ethylacetat und Aceton. Bei der Wahl des Lösungsmittels sollte darauf geachtet werden, daß der Siedepunkt nicht so hoch liegt, da das Lösungsmittel nach der erfolgten Umsetzung entfernt,insbesondere verflüchtigt werden muß.

Die Reaktionstemperatur richtet sich nach der Wahl des Lösungsmittels und nach der Reaktivität der eingesetzten Ausgangsmaterialien. Die Reaktionstemperatur liegt demgemäß in den meisten Fällen zwischen Raumtemperatur und dem Siedepunkt des verwendeten Lösungsmittels, wobei Raumtemperatur bevorzugt wird.

Für die Herstellung der erfindungsgemäßen Stoffe existieren prinzipiell mehrere Möglichkeiten. Am meisten bevorzugt ist es, das organische Polymere in einem geeigneten Lösungsmittel zu lösen und daraufhin durch Zugabe der hydrolytisch polykondensierbaren anorganischen Verbindung(en) und durch Einwirkenlassen von Wasser bzw. Feuchtigkeit die Ausbildung des anorganischen Netzwerks in der Lösung zu veranlassen.

Insbesondere die bevorzugte Art und Weise der Wasserzugabe hängt von der Auswahl der anorganischen Verbindung ab. Grundsätzlich muß die Wasserzugabe um so vorsichtiger erfolgen, je bereitwilliger die anorganische Komponente mit Wasser reagiert. So kann z.B. bei Kieselsäureestern, die gegenüber Wasser weniger reaktiv sind, Wasser als solches langsam zugegeben werden, wobei bei Kieselsäureestern mit längeren aliphatischen Resten die Anwesenheit eines Kondensationskatalysators erforderlich sein kann.

Als Kondensationskatalysatoren eignen sich Protonen oder Hydroxylionen abspaltende Verbindungen und Amine bzw. Aminoderivate. Spezielle Beispiele sind organische oder anorganische Säuren, wie Salzsäure, Schwefelsäure, Phosphorsäure, Ameisensäure oder Essigsäure, sowie organische oder anorganische Basen, wie Ammoniak, Alkali-oder Erdalkalimetallhydroxide, z.B. Natrium-, Kalium-oder Calciumhydroxid, und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt.

Bei Kieselsäureestern kann, wenn diese in Verbindung mit organischen Polymeren für Beschichtungszwecke verwendet werden sollen, das Wasser in stöchiometrischen Mengen zugegeben werden, wobei nur darauf geachtet werden muß, daß die Auftragung in homogener Lösung noch möglich bleibt.

Bei den sehr reaktiven anorganischen Komponenten, wie z.B. den Estern von Titan, Zirkon, Aluminium, Bor und Zinn, sollte Wasser am Anfang nur in sehr dosierten Mengen zugegeben werden. Es wird bevorzugt, in diesem Fall das Wasser nicht als solches, sondern in Form von Stoffen, die Wasser langsam freisetzen, zuzugeben. Als besonders geeignet hat sich in vielen Fällen die Eintragung der Wassermengen

in das Reaktionsgemisch mit Hilfe von feuchtigkeitsbeladenen Adsorbentien, z.B. Kieselgel oder Molekularsieben, wasserhaltigen organischen Lösungsmitteln, z.B. 80%-igem Ethanol, oder Salzhydraten, z.B. $CaCl_2 6H_2O$, erwiesen. Insbesondere die Verwendung von mit Wasser beladenem Kieselgel ist sehr vorteilhaft. Die Wasserzugabe kann auch über eine Reaktion erfolgen, bei der Wasser gebildet wird, z.B. bei der Esterbildung aus Säure und Alkohol (CCC = chemically controlled condensation).

Liegt z.B. ein sehr reaktiver Titan-Ester vor, so gibt man beispielsweise am Anfang 1/20 bis 1/10 der zur Hydrolyse stöchiometrisch benötigten Wassermenge über mit Wasser beladenes Kieselgel zu. Sobald eine gewisse Kondensation erfolgt ist, kann das restliche Wasser auf einmal zugegeben werden, ohne daß es dabei noch zu einer Ausfällung von $TiO_2$ käme.

Bei Aluminiumverbindungen erfolgt die Wasserzugabe vorzugsweise in mehreren, z.B. drei Stufen, wobei in der ersten Stufe z.B. 1/10 bis 1/20 der zur Hydrolyse stöchiometrisch benötigten Wassermenge zugegeben wird. Nach kurzem Rühren folgt die Zugabe von 1/5 bis 1/10 der stöchiometrischen Wassermenge und nach weiterem kurzen Rühren wird schließlich eine stöchiometrische Wassermenge zugegeben, so daß am Schluß ein leichter Wasserüberschuß vorliegt.

Für Beschichtungszwecke kann es vorteilhaft sein, wenn man die Reaktionsmischung nicht mit der gesamten stöchiometrischen Menge Wasser versetzt, sondern nur einen Teil derselben zugibt und die Reaktionsmischung dann einer wasserdampfhaltigen Atmosphäre aussetzt, wodurch ein Aushärten durch Aufnahme von Wasser aus der Luft erfolgen kann.

Bei den anderen möglichen Wegen zur Herstellung der erfindungsgemäßen Stoffe, d.h. dem Aufbau des organischen Polymers nach Herstellung des anorganischen Netzwerks oder mehr oder weniger gleichzeitig damit, verfährt man im Prinzip genauso wie oben für die Herstellung des anorganischen Netzwerks in Anwesenheit des organischen Polymeren beschrieben.

Das organische Polymere wird dabei nach den gängigen Polymerisationsverfahren entweder radikalisch oder ionisch in Anwesenheit eines geeigneten, Radikale oder Ionen liefernden Katalysators aus den jeweils zugrunde liegenden organischen Ausgangsstoffen, d.h. in den Regel den monomeren Verbindungen, hergestellt. Für diesen Zweck geeignete Katalysatoren und Monomere sind auf diesem Gebiet wohlbekannt. Auch die Reaktionsbedingungen unterscheiden sich nicht von denen, die im allgemeinen für derartige Polymerisationen angewendet werden. Selbstverständlich können auch Polykondensations-oder Polyadditionsreaktionen der organischen Ausgangssubstanzen zur Herstellung organischer Polymerer verwendet werden.

Soll das anorganische Netzwerk zuerst ausgebildet werden, so muß insbesondere im Falle von hoch reaktiven Al-und Ti-Verbindungen, z.B. den Titanaten, darauf geachtet werden, daß anfangs nur sehr wenig Wasser zugegeben wird, da sonst $TiO_2$ oder $Al_2O_3$ ausfällt, was die Herstellung der erfindungsgemäßen Stoffe verhindert bzw. sehr erschwert. Für die Herstellung des anorganischen Netzwerks neben oder vor der Herstellung des organischen Polymeren werden Silicium-und Borverbindungen bevorzugt, wobei man bei den Borsäureestern wegen der Flüchtigkeit dieser Verbindungen darauf achten sollte, daß die Reaktionstemperatur nicht zu hoch gewählt wird.

Im allgemeinen wird es bevorzugt, die Reaktionstemperatur bei allen Verfahren zur Herstellung der erfindungsgemäßen Stoffe am Anfang möglichst niedrig zu halten; gegen Ende oder nach Beendigung der Herstellung kann die Temperatur jedoch erhöht werden, was zum einen der Erhöhung des Kondensationsgrades, z.B. bei den weniger reaktiven anorganischen Verbindungen, und zum anderen dem (teilweisen) Austreiben des Lösungsmittels dient.

In einem typischen Verfahren zur Herstellung eines erfindungsgemäßen anorganischen Polykondensats wird das organische Polymere in einem organischen Lösungsmittel gelöst und diese Lösung daraufhin z.B. mit $Ti(OR)_4$ versetzt. Die homogene Lösung wird dann entweder in einer wasserdampfhaltigen Atmosphäre stehen gelassen (Aufnahme von Feuchtigkeit) oder vorsichtig mit Wasser versetzt, z.B. über Kieselgel. Dabei erfolgt eine Vernetzung der anorganischen Komponente, die sich in einer Viskositätszunahme äußert. Das Produkt wird entweder als solches verwendet (z.B. als Lack, der Überzüge mit verbesserten mechanischen Eigenschaften, wie Kratzfestigkeit, Elastizität und Zugfestigkeit ergibt) oder die Lösung wird eingedampft, wodurch man einen Formkörper erhält.

Die erfindungsgemäßen anorganischen Polykondensate bzw. organischen Polymeren zeichnen sich durch eine außerordentliche Variationsbreite ihrer Eigenschaften aus. Durch geeignete Modifikationen des Herstellungsverfahrens, z.B. durch die Reihenfolge des Aufbaus der verschiedenen Netzwerktypen, lassen sich Werkstoffe mit sehr unterschiedlichen (maßgeschneiderten) Eigenschaften herstellen. Dadurch wird es möglich, die Eigenschaften von bekannten organischen Polymeren über den Aufbau eines zusätzlichen anorganischen Netzwerks in ihren mechanischen und chemischen Eigenschaften drastisch zu verändern.

Die erfindungsgemäßen Stoffe lassen sich demgemäß für alle Zwecke verwenden, für die auch die herkömmlichen organischen Polymeren eingesetzt werden.So kann man daraus z.B. Überzüge, Folien,

Fasern, Formkörper, Klebstoffe und dgl. herstellen.

So lassen sich z.B. aus einem Ethylenvinylacetat-Copolymeren (EVA), das durch den Einbau eines $TiO_2$-Netzwerkes über die Hydrolyse und Kondensation von $Ti(OR)_4$ modifiziert wurde, harte Körper herstellen, die für optische Linsen verwendbar sind. Auch Beschichtungsmaterialien mit hervorragender chemischer Beständigkeit und guten mechanischen Eigenschaften sind daraus herstellbar. Das reine, unmodifizierte EVA ist hierzu vollkommen ungeeignet.

Die folgenden Beispiele sollen die Erfindung erläutern.

## BEISPIEL 1

80 g Paraloid B 72 (Polyacrylat, Produkt der Fa. Röhm & Haas, Darmstadt) werden unter Rühren zu 320 g Toluol zugegeben und am Rückfluß (Intensivkühler und Trockenrohr) solange erhitzt (ungefähr 3 h), bis der Feststoff vollständig gelöst ist. Es resultiert eine klare Lösung, die im verschlossenen Kolben bei Raumtemperatur ohne merkliche Veränderung gelagert werden kann. Zu 100 g dieser Lösung werden bei Raumtemperatur unter kräftigem Rühren 28,5 g $Ti(OEt)_4$ zugetropft (50 Gew.-% $TiO_2$,bezogen auf Paraloid). Diese schwach gelb gefärbte Lösung ist bei Raumtemperatur im geschlossenen Kolben haltbar, wobei keine merkliche Viskositätsänderung zu beobachten ist. Zu 64,3 g dieser Lösung werden bei Raumtemperatur unter Rühren ingesamt 0,84 g (3/16 der für die vollständige Hydrolyse von $Ti(OEt)_4$ notwendigen Menge) Wasser in Form von mit Wasser beladenen Trockenperlen (Trockenperlen Typ WS, Kali-Chemie, Hannover) (1 g Wasser auf 1 g Trockenperlen) gegeben. Anschließend wird im verschlossenen Kolben 24 h bei Raumtemperatur weitergerührt. Die schwach gelb gefärbte Lösung wird anschließend abdekantiert und zentrifugiert.Sie ist bei Raumtemperatur im geschlossenen Kolben haltbar, wobei keine merkliche Viskositätsänderung zu beobachten ist. Die so erhaltene Lösung kann zu Beschichtungszwecken weiterverarbeitet werden, wobei übliche Techniken eingesetzt werden. Durch Einengen der Lösung zu einer gerade noch gießbaren Massen, Gießen in Formen und Eindampfen des Lösemittels lassen sich beliebige Formkörper herstellen.

## BEISPIEL 2

Zu 200 g Paraloid-Lösung aus Beispiel 1 werden analog Beispiel 1 53 g $Zr(OPr)_4$ zugegeben. Die resultierende Lösung ist bei Raumtemperatur im geschlossenen Kolben haltbar, wobei keine merkliche Viskositätsänderung zu beobachten ist. Zu 126,5 g dieser Lösung werden analog Beispiel 1 1,1 g Wasser in Form von mit Wasser angefeuchteten Trockenperlen zugegeben. Die weiteren Arbeitsschritte erfolgen wie in Beispiel 1.

## BEISPIEL 3

Zu 200 g Paraloid-Lösung aus Beispiel 1 werden analog Beispiel 1 50,7 g $Si(OMe)_4$ zugegeben. Die resultierende Lösung ist im geschlossenen Kolben haltbar, wobei keine merkliche Viskositätsänderung zu beobachten ist. Zu 125,4 dieser Lösung werden analog Beispiel 1 2,25 g Wasser in Form von mit Wasser angefeuchteten Trockenperlen zugegeben Die weiteren Arbeitsschritte erfolgen wie in Beispiel 1.

## BEISPIEL 4

25 g Elvax 170 (Ethylen/Vinylacetat-Copolymeres, Dupont de Nemours GmbH, Düsseldorf) werden unter Rühren zu 475 g Toluol gegeben und am Rückfluß (Intensivkühlen und Trockenrohr) solange erhitzt,bis der Feststoff vollständig in Lösung gegangen ist (ungefähr 5 h). Nach Abkühlung auf Raumtemperatur resultiert eine klare Lösung, die im verschlossenen Kolben ohne merkliche Veränderung gelagert werden kann. Zu 200 g dieser Lösung werden bei Raumtemperatur unter kräftigem Rühren 14,3 g $Ti(OEt)_4$ zugetropft (50 Gew.-% $TiO_2$ bezogen auf Elvax-170). Zu 107 g der frisch hergestellten Lösung werden analog wie in Beispiel 1 0,43 g Wasser in Form von mit Wasser angefeuchteten Trockenperlen zugegeben. Die weiteren Arbeitsschritte erfolgen wie in Beispiel 1.

BEISPIEL 5

Zu 200 g der Lösung aus Beispiel 4 werden analog wie in Beispiel 4 13,2 g $Zr(OPr)_4$ zugetropft. Die resultierende Lösung ist bei Raumtemperatur im geschlossenen Kolben haltbar, wobei keine merkliche Viskositätsänderung zu beobachten ist. Zu 107 g der frisch hergestellten Lösung werden analog wie in Beispiel 1 0,27 g Wasser in Form von mit Wasser angefeuchteten Trockenperlen zugegeben. Die weiteren Arbeitsschritte erfolgen wie in Beispiel 1.

Beispiel 6

Zu 200 g der Lösung aus Beispiel 4 werden analog wie in Beispiel 1 12,7 g $Si(OMe)_4$ zugetropft. Die resultierende Lösung ist bei Raumtemperatur und im geschlossenen Kolben haltbar, wobei keine merkliche Viskositätsänderung zu beobachten ist. Zu 106 g der frisch hergestellten Lösung werden analog Beispiel 1 0,56 g Wasser in Form von mit Wasser angefeuchteten Trockenperlen zugesetzt. Die weiteren Arbeitsschritte erfolgen analog Beispiel 1.

**Ansprüche**

1. Verfahren zur Herstellung anorganischer Polykondensate mit eingebauten organischen Polymeren, dadurch gekennzeichnet, daß man entweder

a) eine Lösung von mindestens einem organischen Polymeren und von mindestens einer anorganischen, hydrolytisch polykondensierbaren, monomeren oder bereits teilkondensierten Verbindung in einem geeigneten Lösungsmittel der Einwirkung von Wasser bzw. Feuchtigkeit aussetzt, oder

b) in einer Lösung von polymerisierbaren organischen Komponenten und mindestens einer anorganischen, hydrolytisch polykondensierbaren monomeren oder bereits teilkondensierten Verbindung in einem geeigneten Lösungsmittel entweder

i) zunächst eine Polymerisation der organischen Komponenten durchführt und die Lösung daraufhin der Einwirkung von Wasser bzw. Feuchtigkeit aussetzt; oder

ii) zunächst durch Einwirkenlassen von Wasser bzw. Feuchtigkeit die Polykondensation der anorganischen Verbindung(en) veranlaßt und daraufhin die organischen Komponenten polymerisiert; oder

iii) die Polymerisation der organischen Komponenten und die Polykondensation der anorganischen Verbindung(en) nebeneinander durchführt.

2. Verfahren zur Herstellung anorganischer Polykondensate nach Anspruch 1, dadurch gekennzeichnet, daß als anorganische, hydrolytisch polykondensierbare Verbindung eine oder mehrere Verbindungen von Elementen aus der Gruppe Al, B,Si , Sn, P, As, Sb, Bi, V, Ti, Zr, Cr, Mo, W und Mn eingesetzt werden.

3. Verfahren zur Herstellung anorganischer Polykondensate nach einem der Ansprüche 1 oder 2, dadurch gekennzeichnet, daß als anorganische, hydrolytisch polykondensierbare Verbindung eine solche der Summenformel

$$AlR_3$$

in welcher die Reste R, die gleich oder verschieden sein können, Halogen, Alkyl, Alkoxy, Acyloxy oder Hydroxy bedeuten und zwei Reste R zusammen einen Chelatliganden bilden können, oder ein gegebenenfalls komplexiertes Aluminiumsalz einer anorganischen oder organischen Säure eingesetzt wird.

4. Verfahren zur Herstellung anorganischer Polykondensate nach einem der Ansprüche 1 bis 3, dadurch gekennzeichnet, daß als anorganische, hydrolytisch polykondensierbare Verbindung eine solche der Formel (I)

$$MR'_4 \quad (I)$$

in welcher M für Ti oder Zr steht und die Reste R', die gleich oder verschieden sein können, Halogen, Alkoxy oder Acyloxy bedeuten, verwendet wird.

5. Verfahren zur Herstellung anorganischer Polykondensate nach einem der Ansprüche 1 bis 4, dadurch gekennzeichnet, daß als anorganische, hydrolytisch polykondensierbare Verbindung eine solche der Formel (II)

$R''_mSiX_{(4-m)}$ (II)

in der die Gruppen X, die gleich oder verschieden sein können, Wasserstoff, Halogen, Alkoxy, Acyloxy, Alkylcarbonyl, Alkoxycarbonyl oder $-NR'''_2$ ($R'''$ = H und/oder Alkyl) bedeuten und die Reste R'', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O-oder S-Atome oder die Gruppe $-NR'''$ unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy-oder Vinylgruppen tragen können und m den Wert 1, 2 oder 3 hat, verwendet wird.

6. Verfahren zur Herstellung anorganischer Polykondensate nach einem der Ansprüche 1 bis 5, dadurch gekennzeichnet, daß mindestens ein anorganischer Netzwerkwandler eingesetzt wird.

7. Verfahren zur Herstellung anorganischer Polykondensate nach einem der Ansprüche 1 bis 6, dadurch gekennzeichnet, daß mindestens eine Verbindung von Elementen aus der Gruppe Zn, Fe, Co, Ni, Lanthaniden, Actiniden, Pb und Erdalkalimetalle zur Herstellung des anorganischen Netzwerks eingesetzt wird.

8. Verfahren zur Herstellung anorganischer Polykondensate nach einem der Ansprüche 1 bis 7, dadurch gekennzeichnet, daß als organisches Polymeres Polyacrylat, Polymethacrylat, Polyamid , Polyurethan, Polycarbonat, Polyvinylchlorid, Polystyrol oder Ethylenvinylacetat eingesetzt wird.

9. Verfahren zur Herstellung anorganischer Polykondensate nach einem der Ansprüche 1 bis 8, dadurch gekennzeichnet, daß 5 bis 75 Gew.-%, vorzugsweise 20 bis 50 Gew.-%, anorganische, hydrolytisch polykondensierbare Verbindungen, bezogen auf das Gesamtgewicht vor organischen und anorganischen Komponenten, verwendet werden.

10. Anorganische Polykondensate mit eingebauten organischen Polymeren, erhältlich nach dem Verfahren gemäß einem der Ansprüche 1 bis 9.

11. Verwendung der anorganischen Polykondensate nach Anspruch 10 zur Herstellung von Überzügen und Formkörpern.